# FASCICULE DE BREVET EUROPEEN

(11) **EP 2 821 379 B1**
(45) Date de publication et mention de la délivrance du brevet: **28.10.2015**
(21) Numéro de dépôt: 14305995.4
(22) Date de dépôt: 24.06.2014
(51) Int. Cl.: C03C 25/62, G02B 6/02

(54) **Procédé de fabrication d'une fibre optique résistante aux radiations, fibre optique résistante aux radiations et dispositif comportant une telle fibre**
Herstellungsverfahren einer strahlungsresistenten optischen Faser, strahlungsresistente optische Faser und eine solche Faser umfassende Vorrichtung
Method for manufacturing a radiation-resistant optical fibre, radiation-resistant optical fibre and device comprising such a fibre

(30) Priorité: 05.07.2013 FR 1356665
(43) Date de publication de la demande: 07.01.2015
(73) Titulaire: IXBLUE, 78160 Marly le Rol (FR); Centre National d'Etudes Spatiales (CNES), 75001 Paris (FR)
(72) Inventeur: Robin, Thierry, 22450 Camlez (FR); Laurent, Arnaud, 22450 Quemperven (FR)
(74) Mandataire: Coralis Harle

(56) Documents cités:
- EP-A2- 1 523 075
- WO-A1-2009/054745
- WO-A1-2012/004547
- US-A1- 2002 154 874

## Description

La présente invention se rapporte au durcissement des fibres optiques destinées à être utilisées dans un environnement radiatif tel qu'en milieu spatial ou en environnement nucléaire. En particulier, l'invention concerne le durcissement des fibres optiques non dopées pour la transmission de signaux optiques. L'invention concerne aussi le durcissement des fibres optiques dopées, notamment pour des applications d'amplificateur à fibre dopée erbium (EDFA pour Erbium Doped Fiber Amplifier) ou de source à émission spontanée amplifiée (ASE pour amplified spontaneous emission) ou de laser à fibre.

Plus précisément, l'invention concerne un procédé pour renforcer la résistance d'une fibre optique ou d'un système incorporant une fibre optique en milieu radiatif.

Dans le présent document, on entend par radiation un rayonnement électromagnétique ou corpusculaire capable de produire directement ou indirectement des ions, ou de déplacer des atomes lors de son passage à travers les atomes et les molécules de matière. Les sources de radiations peuvent être naturelles (rayonnement cosmique dans l'espace) ou artificielles tels que les rayonnements de photons (rayons X, rayons γ), neutrons, protons, ou ions lourds présents dans les installations nucléaires, dans des instruments scientifiques ou encore dans des appareils médicaux.

Contrairement aux signaux électriques, les signaux optiques présentent l'avantage de ne pas interférer avec les rayonnements ionisants, d'où l'intérêt pour les dispositifs à fibre optique en environnement radiatif. Cependant, il a été observé que l'exposition d'une fibre optique à des radiations induit une dégradation des performances optiques, en particulier une augmentation de l'atténuation linéique de la fibre (dite atténuation induite par irradiation ou encore RIA pour Radiation Induced Attenuation). Les applications en milieu spatial des EDFA (utilisés comme lasers de communication entre satellites) ou des sources ASE (pour les gyroscopes à fibre optique dans les satellites) ou des lasers à fibre, sont aujourd'hui limitées par des phénomènes d'atténuation optique induite par rayonnement (RIA pour Radiation Induced Attenuation), notamment dus aux rayonnements ionisants présents dans l'espace.

De nombreuses études ont été menées sur différents types de fibres optiques pour analyser les effets du RIA, en déterminer les causes et rechercher des traitements permettant d'améliorer la résistance des fibres optiques aux radiations.

Dans le présent document on entend par fibre optique de silice (ou fibre optique en bref) une fibre optique à base de silice, la fibre optique de silice pouvant aussi comprendre d'autres éléments (germanium, phosphore, aluminium, bore, fluor...) et/ou de l'air et pouvant être dopée ou non dopée.

D'une part, l'atténuation induite par rayonnement dépend du type de rayonnement, du débit de dose et de la dose totale reçue par une fibre optique. D'autre part, l'atténuation induite par rayonnement dépend fortement de la composition de la fibre et varie notamment selon qu'il s'agit d'une fibre ayant un coeur en silice pure, en silice dopée au phosphore ou encore d'une fibre optique dopée terre rare.

D'autre part, il est connu que l'ajout d'hydrogène gazeux dilué dans la silice est bénéfique pour la tenue aux radiations. En effet, la présence d'hydrogène permet de neutraliser certains centres colorés (défauts ponctuels dus à des lacunes, défauts interstitiels). L'hydrogène limite les phénomènes de RIA et ainsi améliore les performances des fibres en milieu radiatif et notamment spatial.

Un procédé classique d'hydrogénation consiste à exposer une fibre optique de silice, dopée ou non, sous une pression allant jusqu'environ 300 bars d'hydrogène gazeux à une température de 80°C pendant un temps relativement limité, de l'ordre de 48 heures pour une fibre de silice de 125 microns de diamètre. Ce procédé permet d'introduire de l'hydrogène gazeux dans la silice.

Toutefois, la présence d'hydrogène gazeux dissous dans la silice et notamment au niveau du coeur de la fibre se traduit par l'apparition de nombreuses bandes d'absorption à différentes longueurs d'ondes et d'intensité variées (cf. J. Stone, « Interactions of Hydrogen and Deuterium with Silica Optical Fibers: A Review », Journal of Lightwave Technology, Vol. LT-5, no. 5, pp. 712-733, 1987). Bien que l'hydrogène soit en général considéré comme transparent dans la bande C(1530-1565 nm), on observe en pratique, dans la bande C, un fond d'atténuation qui augmente avec la dilution d'hydrogène.

L'utilisation de deutérium, en lieu et place de l'hydrogène, apporte les mêmes bénéfices en termes de RIA, mais présente l'avantage supplémentaire de limiter les pertes induite par le gaz présent dans le coeur dans la bande C ce qui améliore d'autant les performances des fibres optiques dans la bande spectrale vers 1,5 micron.

Cependant, l'hydrogène ou le deutérium incorporé ne reste pas naturellement dans la silice et désorbe en fonction du temps sur une durée variable de quelques heures à quelques jours en fonction de la température ambiante.

Une solution pour limiter la désorption de l'hydrogène gazeux est d'appliquer un revêtement carbone de quelques centaines d'Angström pour rendre une fibre dopée erbium hermétique à la diffusion de gaz (Zotov, K. V, Likhachev, M. E., Tomashuk, A. L., Bubnov, M. M., Yashkov, M. V, Guryanov, A. N., & Klyamkin, S. N., « Radiation-resistant erbium-doped fiber for spacecraft applications », 4-7, 2007). Les revêtements minces en carbone sont utilisés couramment dans des applications industrielles pour rendre une fibre hermétique à la diffusion de gaz de l'extérieur et vers l'intérieur d'une fibre optique. En particulier, un revêtement hermétique de carbone est appliqué pour protéger les fibres utilisées dans le domaine pétrolier en tant que capteur de température et/ou pression lors de forages, qui sont soumises à des conditions où la température atteint 250°C et où la teneur en hydrogène gazeux peut être importante. Le revêtement mince de carbone est appliqué lors du fibrage.

Cependant un tel revêtement hermétique est étanche au gaz et il est donc en pratique très difficile de charger une fibre à revêtement carbone en hydrogène gazeux à travers ce revêtement hermétique. Pour diffuser de l'hydrogène gazeux à travers un revêtement carbone hermétique, même très mince (c'est-à-dire d'épaisseur inférieure à environ 50 nm), des conditions opérationnelles très contraignantes sont nécessaires : la fibre à revêtement carbone doit être maintenue sous une forte pression d'hydrogène (5 à 110 MPa), à haute température (autour de 200°C) et pendant une très longue durée (une vingtaine de jours). Ce procédé permet effectivement d'incorporer de l'hydrogène à l'intérieur de la fibre à revêtement hermétique et ainsi de réduire l'atténuation induite par rayonnement (RIA).

Néanmoins, les fibres optiques à revêtement hermétique ayant subi un tel traitement d'hydrogénation présentent une très forte absorption sur l'ensemble du spectre et notamment entre 1,4 et 1,8 µm. En effet, à haute température, l'hydrogène forme des liaisons permanentes de type OH qui induisent une forte atténuation optique dans la bande C, avec en particulier une bande de très forte atténuation à 1380 nm et aussi à 1270nm et 950 nm. De plus, on observe une absorption croissante en fonction de la pression d'hydrogène dans le domaine spectral de 1050 à 1350 nm. En réalité, les tentatives d'insertion d'hydrogène gazeux par ce procédé à haute température à travers un revêtement hermétique se soldent par la fixation de l'hydrogène sous forme de liaisons OH. Enfin, ce procédé ne permet pas de mesurer la quantité hydrogène incorporé. Or, pour une trop forte concentration d'hydrogène incorporé, on observe une baisse drastique de l'efficacité d'un laser à base d'une telle fibre optique dopée erbium. Dans ces conditions, l'efficacité en amplification optique des fibres dopées erbium est notablement réduite ce qui relativise l'amélioration du durcissement de la fibre.

Un but de l'invention est de proposer un procédé de fabrication de fibre optique, en particulier dopée terre rare, résistante aux radiations. Un autre but de l'invention est de proposer un tel procédé de fabrication de fibre optique qui soit rapide et efficace. Un autre but de l'invention est de proposer un procédé pour incorporer, dans une fibre optique, une substance gazeuse, de préférence de l'hydrogène gazeux ou du deutérium gazeux, en quantité contrôlée.

La présente invention a pour but de remédier aux inconvénients de l'état de la technique et concerne un procédé de fabrication de fibre optique résistante aux radiations, le procédé comprenant les étapes suivantes :
a) Fabrication d'une préforme de fibre optique de silice ayant un axe longitudinal, un coeur et une gaine optique ;
b) Formation, dans la préforme, d'au moins une cavité longitudinale ;
c) Fibrage de ladite préforme de manière à former une fibre optique de silice comprenant un coeur, une gaine optique et au moins une cavité longitudinale, ladite cavité longitudinale ayant au moins une ouverture à une extrémité de la fibre optique ;
d) Application, pendant l'étape c) de fibrage, d'un revêtement hermétique au gaz, de préférence en carbone ou métallique, tout en conservant au moins une ouverture vers une cavité longitudinale à une extrémité de la fibre optique ;
e) Exposition de la fibre optique à une substance gazeuse, comprenant de préférence de l'hydrogène gazeux et/ou du deutérium gazeux, dans des conditions contrôlées de pression, de température et de durée d'exposition de manière à incorporer une quantité déterminée de ladite substance gazeuse dans la silice via ladite au moins une ouverture ;
f) Fermeture de toute ouverture aux deux extrémités de la fibre optique de manière à former une fibre optique incorporant ladite substance gazeuse et ladite fibre optique étant hermétique à la diffusion de ladite substance gazeuse hors de la fibre optique.

L'invention permet de fabriquer assez simplement une fibre optique résistante aux effets de RIA sans induire d'absorptions parasites dans les bandes de transmission et/ou d'amplification optique de la fibre.

De façon avantageuse, la fibre comporte au moins une cavité longitudinale, s'étendant suivant un axe parallèle à l'axe longitudinal de la fibre, ladite cavité longitudinale étant distante du coeur de la fibre, ou faisant partie de la gaine optique autour du coeur, ladite cavité longitudinale comprenant une ouverture à chaque extrémité de la fibre optique.

Selon des aspects particuliers et avantageux le procédé de fabrication d'une fibre optique résistante aux radiations de l'invention :
- l'étape b) de formation, dans la préforme, d'au moins une cavité longitudinale comprend la formation d'une rainure longitudinale dans ladite préforme ou la formation d'un trou cylindrique d'axe parallèle à l'axe longitudinal de la préforme ou l'assemblage d'un tube creux ;
- l'étape f) de fermeture comprend une étape de soudure d'une extrémité de ladite fibre optique (ayant au moins une ouverture) à une autre fibre optique pleine et/ou une étape de soudure par rétreint d'une extrémité de la fibre optique, ladite soudure par rétreint étant adaptée pour refermer ladite extrémité de fibre optique ;
- suite à l'étape e) d'incorporation d'une substance gazeuse et avant l'étape f) de fermeture, le procédé comporte en outre une étape de désorption de ladite espèce gazeuse incorporée de manière à réduire la concentration en espèce gazeuse incorporée dans la fibre optique.

De façon avantageuse, pendant l'étape e) d'exposition à une substance gazeuse et/ou pendant l'étape de désorption, le procédé de fabrication d'une fibre optique résistante aux radiations comprend une étape de contrôle de la quantité de substance gazeuse incorporée, au moyen d'une mesure spectroscopique d'une bande spécifique liée à ladite substance gazeuse, de préférence une bande d'absorption liée à l'hydrogène ou au deutérium.

Dans un mode de réalisation particulier, le procédé de fabrication d'une fibre optique résistante aux radiations comprend une étape de mesure de transmission optique ou de rétro-diffusion optique à travers le coeur de la fibre optique pendant l'étape c) d'injection d'une substance gazeuse et/ou pendant l'étape e) d'exposition à une substance gazeuse et/ou pendant l'étape de désorption de ladite espèce gazeuse incorporée, de manière à mesurer la quantité de substance gazeuse incorporée dans la fibre de silice.

Selon d'autres aspects particuliers et avantageux du procédé de fabrication d'une fibre optique résistante aux radiations de l'invention :
- ladite fibre optique comporte une deuxième gaine entourant la première gaine optique et dans lequel ladite cavité longitudinale est située dans la première gaine optique ;
- ladite substance gazeuse est choisie parmi de l'hydrogène gazeux et/ou du deutérium gazeux ou un mélange gazeux d'hydrogène et de deutérium.

L'invention concerne aussi une fibre optique de silice résistante aux radiations comprenant un coeur et une gaine optique.

Selon l'invention, ladite fibre optique comporte en outre :
- au moins une cavité longitudinale disposée à l'intérieur de la gaine optique, la cavité longitudinale étant fermée aux deux extrémités de la fibre optique ;
- ladite fibre optique comprenant une concentration déterminée en substance gazeuse, choisie de préférence parmi de l'hydrogène gazeux et/ou du deutérium gazeux ; et
- un revêtement hermétique à la diffusion de ladite substance gazeuse, le revêtement hermétique comprenant de préférence une couche mince de carbone ou de métal.

L'invention permet de disposer d'une fibre optique résistante aux effets de RIA, qui présente d'excellentes performances optiques en termes de transmission et/ou d'amplification optique et dont les performances sont stables dans le temps.

Selon des aspects particuliers et avantageux de la fibre optique résistante aux radiations de l'invention :
- le coeur de la fibre comprend un ou plusieurs éléments parmi : le silicium, le germanium, le phosphore, l'aluminium, le bore, le fluor et/ou un ou plusieurs dopants terre rare parmi le lanthane, le cérium, l'erbium, l'ytterbium, le néodyme, le thulium et/ou l'holmium ;
- ladite fibre optique est une fibre optique microstructurée, une fibre optique à cristaux photonique, une fibre de type à gaine d'air (air-clad), une fibre optique à maintien de polarisation, une fibre optique polarisante, une fibre optique à double gaine, une fibre optique multi-coeur ou une fibre optique multigaine.

L'invention concerne aussi un dispositif à fibre optique comprenant au moins une fibre optique de silice résistante aux radiations selon l'un des modes de réalisation décrits.

L'invention trouvera une application particulièrement avantageuse dans la fabrication de fibres optiques, dopées ou non, et de systèmes basés sur ces fibres optiques et destinés à être utilisés dans un environnement radiatif tel que le milieu spatial, les domaines du nucléaire et de l'instrumentation scientifique ou encore dans des appareils médicaux utilisant des radiations.

L'invention permet avantageusement de déterminer la dose de gaz moléculaire incorporé dans la fibre optique de manière à contrôler que la concentration en gaz est suffisante pour obtenir un effet de protection contre les effets de RIA et que cette concentration est inférieure à un seuil maximum au-delà duquel une atténuation forte est induite dans la bande de longueur d'onde de transmission de la fibre et/ou dans la bande de longueur d'onde de pompage de la fibre.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :
- la figure 1 représente schématiquement un exemple de réalisation d'une fibre optique en vue de coupe longitudinale (Fig. 1A) et en vue de coupe transverse (Fig. 1B) ;
- la figure 2 représente schématiquement un autre exemple de fibre optique selon un autre mode de réalisation de l'invention ;
- la figure 3 représente schématiquement un exemple de fibre optique selon une variante de la figure 1 ;
- la figure 4 représente schématiquement un exemple de fibre optique double gaine selon un autre mode de réalisation de l'invention ;
- la figure 5 représente schématiquement un exemple de fibre optique à maintien de polarisation de type Panda double gaine selon un autre mode de réalisation de l'invention ;
- la figure 6 représente schématiquement un exemple de fibre optique à maintien de polarisation de type elliptique simple gaine selon un autre mode de réalisation de l'invention ;
- la figure 7 représente schématiquement un exemple de fibre optique de type air-clad selon un autre mode de réalisation de l'invention ;
- la figure 8 représente schématiquement un exemple de réalisation d'une étape de soudure d'une fibre optique creuse à une autre fibre optique ;
- la figure 9 représente schématiquement un autre exemple de réalisation d'une étape de soudure pour fermer une extrémité de la fibre optique creuse ;
- la figure 10 est une vue d'une microphotographie d'une section de fibre optique obtenue selon un mode de réalisation de l'invention ;
- la figure 11 représente un amplificateur de type EDFA basé sur une fibre optique de l'invention ;
- la figure 12 est une courbe de mesure de variation de gain d'un EDFA tel que représenté sur la figure 11 en fonction de la durée d'exposition à un rayonnement de source cobalt et en fonction de la dose cumulée de rayonnement reçue.

Un mode de réalisation de l'invention se base sur l'utilisation d'une préforme à trous fibrée avec un revêtement hermétique, de type revêtement mince de métal ou de carbone, pour obtenir une fibre optique creuse dont les trous, ou cavités ouvertes, sont remplis d'hydrogène ou de deutérium gazeux puis refermés aux extrémités avant utilisation. La fibre optique ainsi obtenue comporte de l'hydrogène et/ou du deutérium gazeux dissous dans la matrice de silice et un revêtement mince hermétique au gaz qui permet d'éviter la diffusion vers l'extérieur de l'hydrogène ou du deutérium gazeux incorporé.

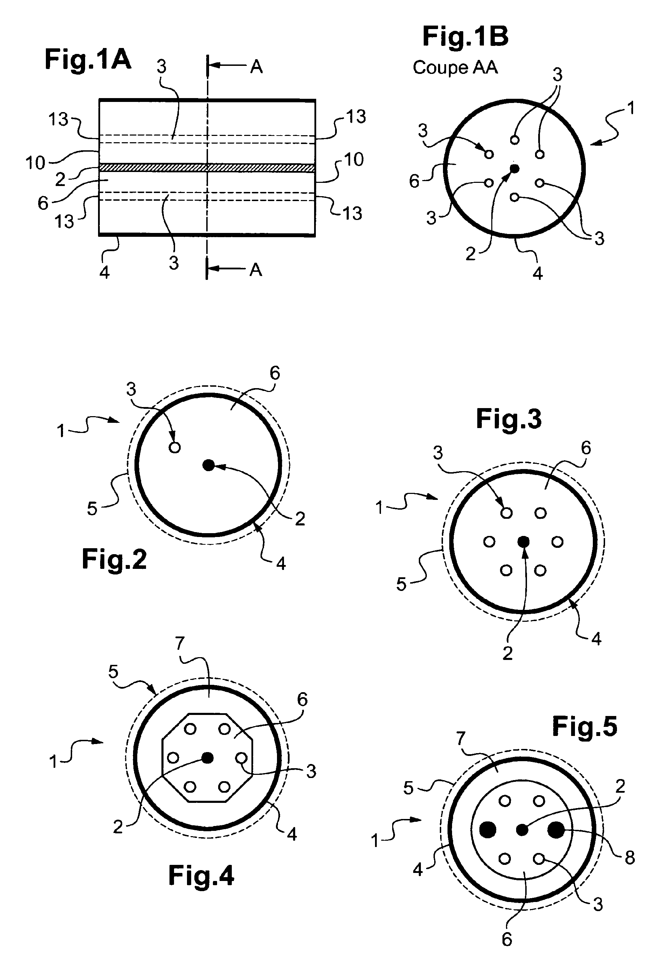

La figure 1 représente un exemple de réalisation d'une fibre optique vue en coupe longitudinale (Fig. 1A) et en coupe transverse (Fig. 1B). La fibre optique 1 comprend un coeur 2 à l'intérieur d'une gaine optique 6, d'indice de réfraction inférieur à celui du coeur 2 de manière à guider un signal optique se propageant dans le coeur 2. La gaine optique 6 est en général à base de silice et le coeur 2 à base de silice dopée d'un ou de plusieurs éléments, connus de l'homme du métier. Les dimensions du coeur 2 et de la gaine optique 6 de la fibre optique sont proportionnelles aux dimensions du coeur et de la gaine optique de la préforme avant fibrage.

Dans l'exemple de la figure 1, plusieurs cavités longitudinales 3 sont aménagées dans la gaine optique 6. Ces cavités longitudinales 3 s'étendent d'une extrémité 10 de la fibre à l'autre extrémité de la fibre et sont débouchantes via des ouvertures 13. La fibre comporte aussi un revêtement 4 hermétique au gaz. Toutefois, le revêtement hermétique 4 n'obture pas les ouvertures 13 des cavités longitudinales 3. Dans l'exemple représenté, six cavités longitudinales 3 sont disposées dans la gaine optique 6. A titre d'exemple, le revêtement hermétique 4 est constitué d'une couche mince de carbone graphite ou de carbone pyrolytique (en anglais graphite-type Carbon ou cross-linked graphite structure).

L'emplacement exact des cavités 3 importe peu. Il suffit que la distance minimum entre le coeur 2 et l'une quelconque des cavités soit supérieure à la distance à laquelle la propagation d'un signal optique se propageant dans le coeur est susceptible d'être perturbée par couplage évanescent du fait de la présence d'une cavité longitudinale 3. De même, la taille des cavités longitudinales 3 importe peu. A titre d'exemple, les cavités longitudinales 3 peuvent être formées de trous de diamètre 3 µm.

Les cavités longitudinales de la fibre optique sont générées à partir de cavités longitudinales de dimension homothétiques dans la préforme avant fibrage.

Les cavités longitudinales de la préforme peuvent être formées suivant différentes techniques de fabrication connues de l'homme du métier.

Par exemple, une cavité longitudinale peut être formée dans la préforme par perçage excentré à partir d'une préforme ayant une gaine uniformément pleine. Dans un autre exemple, une cavité longitudinale peut être formée par assemblage de sections cylindriques de verre en laissant des espaces vides entre ces sections de préforme. Dans encore un autre exemple de réalisation, une cavité longitudinale peut être formée dans la préforme par assemblage d'un tube de verre creux et de sections cylindriques de verre complémentaires au tube. Dans un autre exemple de réalisation, une cavité longitudinale peut être formée par rainurage d'une première préforme cylindrique puis en insérant cette préforme rainurée dans un tube creux. A cet égard, le document FR2954525A1 décrit différents modes de fabrication de préformes comprenant des cavités.

On procède au fibrage en laissant ouverts les trous de la préforme.

Le fibrage de la préforme est effectué de manière à ce que la fibre optique 1 ainsi obtenue comporte au moins une cavité longitudinale 3, ladite cavité longitudinale 3 ayant au moins une ouverture 13 à une extrémité de la fibre optique 1. Lors du fibrage les cavités restent ouvertes pendant tout le fibrage et sur toute la longueur de la fibre optique.

De plus, pendant le fibrage de la préforme, un revêtement hermétique 4 est appliqué autour de la gaine optique. De façon avantageuse, le revêtement hermétique est un revêtement de carbone graphite ou de métal (en aluminium ou en or par exemple). Après fibrage, le revêtement hermétique 4 a en général une épaisseur de l'ordre de un nanomètre à quelques dizaines de nanomètres. Le revêtement hermétique 4 a en général une forme cylindrique, de section annulaire et d'axe confondu avec l'axe longitudinal de la fibre optique.

Dans certains modes de réalisation, un revêtement 5 classique (non hermétique) est appliqué pendant le fibrage autour du revêtement hermétique. Le revêtement 5 classique peut comprendre une ou plusieurs couches de polymère, d'acrylate, de polyimide et/ou de silicone. L'épaisseur totale du revêtement 5 classique est en général de quelques microns à quelques dizaines de microns.

Après fibrage, on découpe la fibre optique en tronçons. Chaque tronçon de fibre optique ainsi obtenu comporte donc une ouverture 13 pour chaque cavité 3 à chacune de ses deux extrémités 10.

Dans la suite du présent document, on entend par fibre optique un tronçon de fibre optique.

De façon avantageuse, les extrémités 10 de la fibre optique 1 sont coupées pour former des faces d'extrémité transverses à l'axe longitudinal de la fibre optique.

Après fibrage, on obtient une fibre optique 1 telle qu'illustrée sur la figure 1, comportant une pluralité de cavités longitudinales 3, chaque cavité ayant une ouverture 13 à chacune des deux extrémités 10 de la fibre optique. Dans une variante, la ou les cavités longitudinales 3 présentent une ouverture 13 à une seule extrémité de la fibre optique et sont fermées à l'autre extrémité.

On a ainsi fabriqué une fibre optique 1 ayant un revêtement hermétique 4 et comprenant une ou plusieurs ouvertures 13 conduisant respectivement à une ou plusieurs cavités longitudinales 3 à l'intérieur de la gaine optique 6 de la fibre optique 1.

On place la fibre optique 1 ainsi obtenue dans une enceinte pressurisée dans laquelle on injecte une substance gazeuse, de préférence de l'hydrogène gazeux ou du deutérium gazeux ou un mélange d'hydrogène et de deutérium gazeux. Le gaz entre dans les cavités longitudinales 3 via les ouvertures 13. De cette manière, la fibre optique peut être chargée en hydrogène gazeux et/ou deutérium gazeux. Le gaz ne reste pas confiné dans les cavités longitudinales 3, mais se dissout dans la fibre optique. Le gaz se dissout en particulier dans la gaine optique et dans le coeur de la fibre optique. L'injection de gaz est effectuée à basse température, en général inférieure à 150°C, et de manière préférée autour 80°C. A titre d'exemple illustratif, on expose une fibre creuse en silice de diamètre 125 µm à du deutérium gazeux sous une pression de 2.10⁷ Pascal, à une température de 80°C, pendant 96 heures, jusqu'à saturation de la silice en deutérium.

L'étape d'injection d'hydrogène et/ou de deutérium gazeux a pour finalité de dissoudre de l'hydrogène et/ou du deutérium gazeux dans la fibre de silice via les ouvertures et les cavités. L'étape d'injection d'hydrogène et/ou de deutérium gazeux via les trous est donc une étape intermédiaire permettant de dissoudre de l'hydrogène et/ou du deutérium gazeux dans la fibre.

Dans un mode de réalisation particulier et avantageux, on désorbe ensuite la fibre de manière contrôlée, après l'étape de chargement en hydrogène ou deutérium gazeux et avant de refermer les ouvertures 13 aux deux extrémités, tout en mesurant en continu le pic d'absorption du deutérium vers 1.7 µm (ou respectivement de l'hydrogène vers 1.24 µm) et en chauffant la fibre à 80°C. La mesure du pic d'absorption s'effectue en faisant passer un signal dans le coeur de la fibre, par exemple dans une configuration de transmission au moyen d'une source et d'un puissance-mètre optique ou dans une configuration de rétrodiffusion au moyen d'un réflectomètre optique dans le domaine temporel (OTDR pour Optical Time Domain Reflectometer). La fibre optique est ainsi désorbée de manière contrôlée jusqu'à obtenir une fraction déterminée de deutérium gazeux (respectivement d'hydrogène gazeux) dissous dans la fibre optique. En pratique, on détermine un seuil minimum et un seuil maximum du pic d'absorption d'hydrogène ou respectivement de deutérium et on mesure ce pic d'absorption. En effet, une trop forte concentration en deutérium ou en hydrogène a pour effet d'augmenter le fond d'atténuation de la fibre optique et de diminuer les performances de la fibre optique en termes de transmission ou d'amplification selon le type de fibre. Cette désorption permet de ne maintenir dans la fibre optique qu'une fraction de deutérium ou d'hydrogène suffisante pour la neutralisation des centres colorés. Eventuellement, le procédé peut être réalisé en plusieurs étapes de chargement en substance gazeuse et de désorption contrôlée jusqu'à l'obtention de la concentration souhaitée. On estime cette concentration à moins de 10% de la dilution maximale.

Le maintien d'une température relativement basse pendant les opérations d'injection de substance gazeuse et/ou de désorption permet d'éviter la création de liaisons permanentes de type OH ou OD, susceptibles de générer des bandes d'absorption nuisibles à la transmission de signaux optiques ou de faisceau de pompage optique.

Après exposition de la fibre optique à la substance gazeuse, les cavités longitudinales 3 de la fibre 1 sont refermées à leur(s) extrémité(s) ouverte(s), de manière à emprisonner l'hydrogène gazeux ou le deutérium gazeux dans la fibre 1.

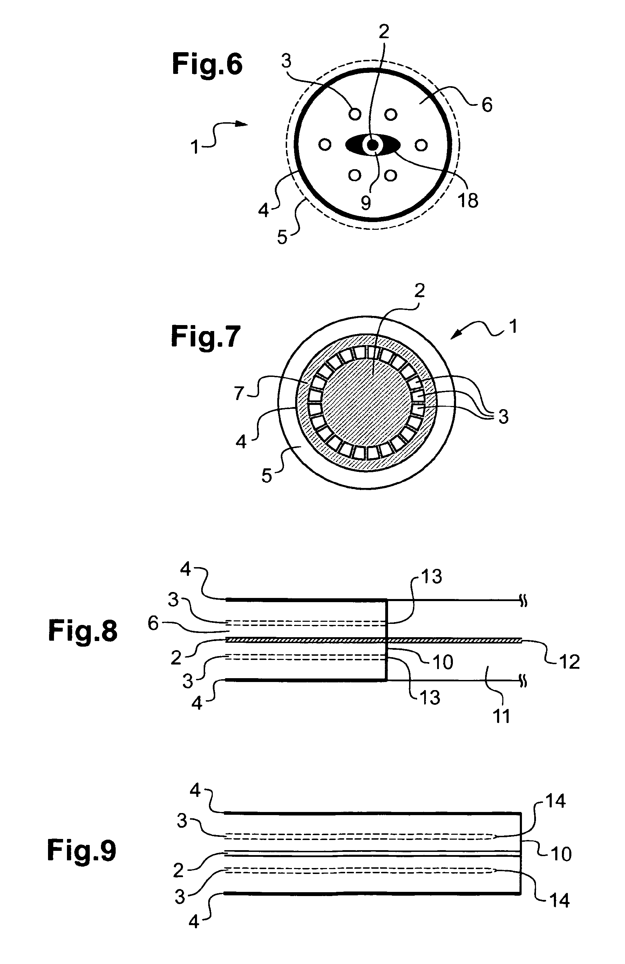

Dans un mode de réalisation préféré, représenté sur la figure 8, on soude la ou les deux extrémités de la fibre creuse à une fibre optique classique 11, c'est à dire une fibre sans trou dans la gaine optique de manière à obturer les ouvertures 13. Lors de la soudure, le coeur 2 de la première fibre optique 1 est aligné sur le coeur 12 de la deuxième fibre optique 11. De façon avantageuse, la gaine optique de la fibre pleine 11 est aussi revêtue d'un revêtement, de carbone ou de métal, hermétique au gaz.

Dans un autre mode de réalisation, représenté sur la figure 9, l'application d'une soudure permet de refermer les ouvertures 13 par effondrement des cavités 3 sur elles-mêmes. Dans l'exemple de la figure 8, la soudure est localisée sur l'extrémité 10 ouverte de la fibre optique manière à former une cavité longitudinale 3 remplie de gaz et fermée par une extrémité 14.

Dans les deux modes de réalisation des figures 8 et 9, seules les extrémités de la fibre optique 1 sont exposées à une température élevée lors de la soudure.

Pour ces soudures, on peut utiliser une soudeuse pour fibre optique, qui peut être de différents types : soudeuse à arc, à plasma, à filament ou même soudure assistée par laser CO₂. La méthode préférée de soudure est la soudure à une fibre pleine car, dans la plupart des applications, la fibre optique est intégrée à un montage optique et donc soudée à une fibre d'entrée et de sortie.

Pendant la soudure, les cavités ne sont en général plus alimentées par injection de gaz. Les cavités peuvent alors se vider du gaz. Toutefois, après la fermeture des extrémités de la fibre optique, le gaz dissous dans la fibre remplit à nouveau les cavités, par un équilibre des pressions partielles entre le gaz dissous dans la silice et le gaz remplissant les cavités. La fermeture des cavités aux extrémités de la fibre permet de conserver une pression partielle en hydrogène ou deutérium gazeux relativement élevée et limite la diffusion de gaz à une très faible diffusion résiduelle du gaz vers l'extérieur de la fibre optique.

La fibre optique 1 est ainsi chargée en hydrogène gazeux ou deutérium gazeux par l'intérieur de la fibre et non au travers du revêtement hermétique 4 au gaz. Le gaz est en partie dissous dans la fibre optique de silice. Il reste du gaz dans la(les) cavité(s) qui est en quelque sorte un réservoir à H₂ et/ou D₂. Un équilibre des pressions partielles s'établit entre le gaz dissous dans la silice et celui présent dans les trous. La fibre étant revêtue d'un revêtement hermétique 4 et étant fermée à ses deux extrémités, le gaz enfermé dans la fibre ne peut en pratique pas diffuser à l'extérieur de la fibre. Dans le cas de la soudure d'une extrémité ouverte à une fibre pleine, la fibre pleine est de préférence aussi revêtue d'un revêtement hermétique. Le gaz dissous dans la fibre peut, de manière résiduelle, diffuser vers l'extrémité soudée de la fibre pleine, mais ne peut pas diffuser vers l'extérieur. Dans le cas de soudure d'une extrémité de la fibre à trous par rétreint, la longueur de la zone de rétreint, de plusieurs millimètres à plusieurs centimètres, rend quasiment infini le chemin de diffusion du gaz dissous vers l'extérieur.

Un des avantages de l'invention est que l'hydrogène ou le deutérium incorporé dans la fibre optique hermétique reste dissous dans la fibre de silice sous forme gazeuse et ne se fixe pas sous forme de liaisons OH.

Les figures 2 à 7 illustrent différents exemples de fibres optiques considérées, de manière non exhaustive, dans le cadre de la présente invention. Les mêmes signes de référence sont utilisés pour désigner des éléments similaires sur les figures 1 à 9.

Ainsi, la figure 2 représente une fibre optique vue en coupe transverse comprenant un coeur 2, une gaine optique 6 et un revêtement hermétique 4 en carbone. La fibre optique de la figure 2 comporte aussi en option un revêtement classique 5 de type acrylate, en une ou deux couches, polyimide et/ou silicone. La fibre optique de la figure 2 comporte une seule cavité longitudinale 3 dans la gaine optique 6. Ce mode de réalisation est particulièrement simple et rapide à réaliser.

La figure 3 représente un autre exemple de fibre optique selon une variante de la figure 1, la fibre étant recouverte d'un premier revêtement hermétique en carbone 4 et d'un revêtement classique 5 disposé autour du revêtement hermétique 4. Le revêtement classique 5 protège le revêtement hermétique 4 de l'usure mécanique susceptible d'endommager la couche mince de carbone. La fibre optique de la figure 3 comporte six cavités longitudinales 3, disposées approximativement aux sommets d'un hexagone. L'emplacement des cavités 3 ne nécessite pas un positionnement extrêmement précis.

La figure 4 représente schématiquement un exemple de fibre optique dite double gaine, la fibre optique 1 comportant un coeur 2 dans une première gaine optique 6, qui est entourée d'une deuxième gaine optique 7 bas indice. De manière connue en soi, dans le cas des fibres amplificatrices, par exemple à coeur dopé terre rare, la deuxième gaine optique sert à guider optiquement une onde de pompe couplée dans la première gaine optique 6 pour un pompage optique longitudinal. Dans l'exemple de la figure 4, la première gaine optique 6 a une section non circulaire et non symétrique de révolution pour permettre une homogénéisation du faisceau de pompe. A titre d'exemple, la gaine optique 6 présente une section octogonale. Un revêtement hermétique 4 entoure la deuxième gaine 7. Avantageusement, un revêtement classique 5 entoure le revêtement hermétique 4. Des cavités longitudinales 3 sont disposées dans la première gaine optique 6. A titre d'exemple on a représenté sur la figure 4 six cavités 3, toutefois, un nombre plus faible ou plus élevé de cavités 3 peut également convenir. Dans le cas des fibres à double gaine, les cavités longitudinales 3 sont de préférence disposées à l'intérieur de la première gaine optique 6 c'est-à-dire la gaine optique 6 entourant le coeur 2. En effet, dans le cas d'une fibre double gaine, la deuxième gaine bas indice est en général réalisée en silice fluorée. Les trous pourraient y être pratiqués, mais dans ce cas l'épaisseur de la deuxième gaine 7 bas indice devrait être augmentée de telle sorte qu'il n'y ait pas de couplage entre le signal de pompe se propageant dans la partie multimode et les trous.

La figure 5 représente schématiquement un exemple de fibre optique à maintien de polarisation de type Panda et à double gaine, selon un mode de réalisation particulier de l'invention. De manière connue en soi, une fibre à maintien de polarisation comporte un coeur 2, une première gaine optique 6 et deux barreaux de contrainte 8 disposés symétriquement de part et d'autre du coeur 2. La fibre optique 1 comporte éventuellement une deuxième gaine optique 7. La fibre optique 1 comporte aussi un revêtement hermétique 4 en carbone disposé autour de la deuxième gaine optique 7. Avantageusement, un revêtement classique 5 de protection entoure le revêtement hermétique 4. Les barreaux de contrainte 8 ont un coefficient de dilatation différent de celui de la gaine optique 6, si bien qu'ils induisent des contraintes opto-mécaniques dans le coeur de la fibre après fibrage. Selon l'invention, on dispose au moins une cavité longitudinale 3 dans la première gaine optique 6 de la fibre. Dans l'exemple représenté sur la figure 5, on prépare quatre cavités longitudinales 3 dans la première gaine optique 6. De façon avantageuse, les cavités longitudinales 3 sont disposées de manière à former avec les deux barreaux de contrainte les sommets d'un hexagone dans une vue en coupe transverse de la fibre 1.

La figure 6 représente un autre exemple de réalisation d'une fibre optique à maintien de polarisation de type elliptique et à simple gaine. La fibre optique de la figure 6 comporte un coeur 2, entouré d'une zone de guidage optique 9, d'indice de réfraction inférieur au coeur 2. La zone de guidage optique 9 est entouré d'une zone de contrainte 18 de forme elliptique. Une gaine optique 6 entoure la zone de contrainte 18 elliptique. La fibre optique 1 comporte aussi un revêtement hermétique 4 en carbone, et, avantageusement, un revêtement classique 5 entourant le revêtement hermétique 4. Selon ce mode de réalisation, la fibre optique comporte en outre une ou plusieurs cavités longitudinales 3 disposées dans la gaine optique 6. Dans l'exemple représenté sur la figure 6, six cavités longitudinales 3 sont disposées dans la gaine optique 6, approximativement aux sommets d'un hexagone. D'autres nombres de cavités longitudinales 3 et d'autres dispositions, géométriques ou non, des cavités longitudinales 3 dans la gaine optique 6 sont également envisageables.

La figure 7 représente une vue en coupe transverse d'une fibre optique de type à gaine d'air (air-clad) selon un autre mode de réalisation de l'invention. La fibre optique de la figure 7 comporte un coeur 2, entouré d'une zone de guidage optique formée par la juxtaposition de cavités 3 disposées en anneau autour du coeur 2, une deuxième gaine optique en silice disposée autour de l'anneau de cavités 3, un revêtement hermétique 4 autour de la deuxième gaine optique 7 et, en option, un revêtement classique 5 autour du revêtement hermétique 4. Les fibres de type air-clad permettent d'obtenir une fibre optique monomode à large coeur, le diamètre du coeur 2 pouvant atteindre plusieurs dizaines de microns. Dans cette fibre double gaine, le guidage multimode est assuré par l'anneau d'air formé par les cavités juxtaposées. Les fibres air-clad trouvent des applications notamment dans les amplificateurs et les lasers à fibre. Dans une fibre de type air-clad classique, les cavités sont en général remplies d'air. Selon ce mode de réalisation, il n'est pas nécessaire de former des cavités supplémentaires dans la préforme, mais il faut rajouter une couche hermétique de carbone ou de métal au fibrage sur la silice extérieure avant d'appliquer le revêtement plastique (de type polymère, acrylate, silicone, polyimide...). Après fibrage, on remplit les cavités de la fibre de type air-clad par un mélange d'air et l'hydrogène gazeux ou du deutérium gazeux. L'ajout d'hydrogène et/ou de deutérium en faible quantité ne modifie pas significativement l'indice du milieu et ne perturbe pas le guidage multimode dans la fibre double gaine assuré par l'anneau de trous. On obtient ainsi une fibre de type air clad, hermétique et chargée en hydrogène gazeux et/ou en deutérium.

Les exemples de fibre représentés sur les figures 1 à 8 ne sont nullement limitatifs, et l'homme du métier adaptera aisément le procédé de l'invention à d'autres types de fibres optiques, par exemple une fibre optique multi-coeur. En particulier, ce procédé est applicable aux fibres microstructurées en appliquant un revêtement hermétique carbone ou métallique et en utilisant les capillaires existant pour les remplir de gaz. De plus, le procédé est applicable quel que soit le diamètre extérieur de la fibre.

Le procédé s'applique à des fibres à coeur non dopé, telles que les fibres classiques de type télécom, ainsi qu'à des fibres dopées.

On illustre ci-dessous un exemple d'application à une fibre optique dopée erbium et son utilisation dans un amplificateur de type EDFA.

La figure 9 est une vue d'une microphotographie d'une section de fibre optique obtenue selon un mode de réalisation de l'invention, dans laquelle des cavités longitudinales sont maintenues après fibrage. On observe sur la figure 9, le coeur de la fibre optique 22 et six cavités 23 disposées dans la gaine optique 26 de la fibre.

La fibre 20 de la figure 9 est une fibre hermétique dopée erbium, et plus précisément avec un coeur 22 de silice dopé germanium, aluminium, lanthane et erbium. L'ouverture numérique du coeur 22 est de 0.26. Le diamètre du coeur est de 2.7 microns. Le diamètre de la gaine optique 26 de la fibre est de 125 microns. La longueur d'onde de coupure est de 930 nm. La fibre 20 comporte un revêtement hermétique 24 en carbone et un double revêtement acrylate classique. L'absorption due à l'erbium vers 1530 nm est de 16 dB/m. La fibre comporte six cavités 23 de 3 microns de diamètre réparties symétriquement autour du coeur. Les cavités 23 sont situées à mi-distance entre le centre de la fibre 20 et sa périphérie, c'est-à-dire à environ 30 microns du centre.

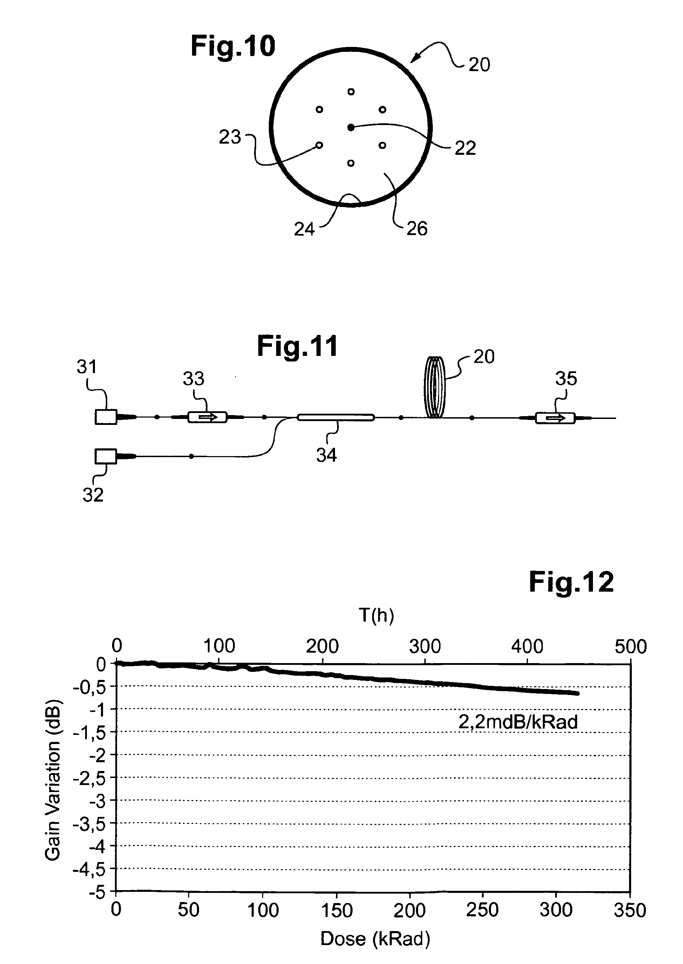

Cette fibre 20 dopée erbium est utilisée pour fabriquer un EDFA suivant le schéma de la figure 10. Une diode laser 31 génère un signal à 1550 nm avec une puissance de -20dBm. Une diode de pompe 32 génère une puissance constante de 100mW. Un isolateur optique 33 est disposé entre la source et un multiplexeur 34. Le multiplexeur permet d'injecter le signal et la pompe dans la fibre 20 dopée erbium. Un deuxième isolateur optique 35 est disposé en sortie de la fibre 20 dopée erbium.

La résistance de l'EDFA est ensuite testée en environnement radiatif. L'EDFA formé suivant le schéma de la figure 10 est exposé à une source de rayonnement gamma au moyen d'une source Cobalt 60. Le débit de dose de rayonnement est de l'ordre de 700 Rad/h.

La puissance de sortie de l'amplificateur est initialement de 10 dBm, ce qui indique que la performance de la fibre traitée selon le procédé de l'invention n'est que marginalement impactée par le niveau, précisément contrôlé, de deutérium résiduel dans la fibre. On mesure un gain de 30 dB pour l'amplificateur EDFA avant son exposition à la source de rayonnement gamma.

On mesure la puissance en sortie de l'amplificateur EDFA en fonction de la durée d'exposition à la source Cobalt de rayonnement gamma. La figure 11 représente une courbe de mesure de variation de gain de l'EDFA présenté ci-dessus en fonction de la durée d'exposition au rayonnement gamma et donc en fonction de la dose cumulée de rayonnement reçue. On observe sur la figure 11 une baisse de puissance de seulement 0.5 dB pour une dose cumulée de 250 kRad. La baisse de puissance de la courbe sur la figure 11 est quasi-linéaire en fonction de la dose, avec une pente de 2.2.10⁻³ dB/kRad.

Le procédé ici décrit est donc très efficace pour renforcer la résistance d'une fibre optique ou d'un EDFA à une source de rayonnement. De plus, et contrairement aux procédés antérieurs, le procédé ne pénalise pas l'efficacité en termes de transmission optique ou d'amplification optique, selon le type de fibre optique et son utilisation, par exemple pour un EDFA.

De façon avantageuse, la ou les étapes d'incorporation de substance gazeuse et/ou de désorption sont effectuées à basse température, en général inférieure à 120°C. Le maintien d'une température basse permet de limiter la fixation de l'hydrogène et la création de liaisons permanentes, de type OH, générant des absorptions nuisibles à la transmission ou l'amplification de signaux optiques.

On vérifie l'étanchéité de l'assemblage constitué de l'amplificateur à fibre dopée erbium et chargée au deutérium, en effectuant un recuit thermique à 80°C pendant 180 heures consécutives. On n'observe aucune variation de puissance en sortie de l'amplificateur EDFA pendant ce recuit thermique, ce qui indique qu'il n'y a aucune déperdition de deutérium.

Une simulation numérique permet de calculer la désorption de l'hydrogène par diffusion dans la silice. On considère ici que le revêtement hermétique 24 est totalement imperméable à l'hydrogène et empêche donc toute diffusion de l'hydrogène à travers ce revêtement. Le seul chemin de diffusion possible pour l'hydrogène est alors le long de la fibre via l'une ou l'autre de ses deux extrémités. Ceci revient à considérer que la fibre optique a un rayon non pas de 62.5 µm, mais de plusieurs mètres. Un exemple de calcul pour une fibre de 1 m de long à une température de 80°C indique que le passage d'une concentration de saturation en hydrogène à une concentration égale à 5% de la valeur de saturation, s'effectue sur une durée de 2.10⁹ heures, soit environ 300 000 ans. En pratique, les fibres traitées suivant le procédé décrit ne subissent qu'une perte extrêmement marginale de leur niveau de chargement initial en hydrogène ou deutérium pendant leur durée de vie, qui est en général de 5 à 20 ans.

## Revendications

1. Procédé de fabrication d'une fibre optique résistante aux radiations, le procédé comprenant les étapes suivantes :
a. Fabrication d'une préforme de fibre optique de silice ayant un axe longitudinal, un coeur et une gaine optique ;
b. Formation, dans la préforme, d'au moins une cavité longitudinale ;
c. Fibrage de ladite préforme de manière à former une fibre optique (1,20) de silice comprenant un coeur (2,22), une gaine optique (6,7) et au moins une cavité longitudinale (3,23), ladite cavité longitudinale (3,23) ayant au moins une ouverture (13) à une extrémité (10) de la fibre optique (1,20) ;
d. Application, pendant l'étape c) de fibrage, d'un revêtement hermétique (4, 24) au gaz, de préférence en carbone ou métallique, tout en conservant ladite au moins une ouverture (13) vers une cavité longitudinale (3,23) à une extrémité (10) de la fibre optique (1,20) ;
e. Exposition de la fibre optique (1,20) à une substance gazeuse, comprenant de préférence de l'hydrogène gazeux et/ou du deutérium gazeux, dans des conditions contrôlées de pression, de température et de durée d'exposition de manière à incorporer une quantité déterminée de ladite substance gazeuse dans la silice via ladite au moins une ouverture (13) ;
f. Fermeture de toute ouverture (13) aux deux extrémités de la fibre optique (1,20) de manière à former une fibre optique (1,20) incorporant ladite substance gazeuse et ladite fibre optique (1,20) étant hermétique à la diffusion de ladite substance gazeuse hors de la fibre optique (1,20).

2. Procédé de fabrication d'une fibre optique résistante aux radiations selon la revendication 1, dans lequel l'étape b) de formation, dans la préforme, d'au moins une cavité longitudinale comprend la formation d'une rainure longitudinale dans ladite préforme ou la formation d'un trou cylindrique d'axe parallèle à l'axe longitudinal de la préforme ou l'assemblage d'un tube creux.

3. Procédé de fabrication d'une fibre optique résistante aux radiations selon l'une des revendications 1 à 2, dans lequel l'étape f) de fermeture comprend une étape de soudure d'une extrémité (10) de ladite fibre optique (1,20) à une autre fibre optique pleine et/ou une étape de soudure par rétreint d'une extrémité (10) de la fibre optique (1,20) ladite soudure par rétreint étant adaptée pour refermer ladite extrémité de fibre optique.

4. Procédé de fabrication d'une fibre optique résistante aux radiations selon l'une des revendications précédentes comprenant suite à l'étape e) d'incorporation d'une substance gazeuse et avant l'étape f) de fermeture, une étape supplémentaire de désorption de ladite espèce gazeuse incorporée de manière à réduire la concentration en espèce gazeuse incorporée dans la fibre optique.

5. Procédé de fabrication d'une fibre optique résistante aux radiations selon l'une des revendications précédentes comprenant une étape de mesure de transmission optique ou de rétro-diffusion optique à travers le coeur (2, 22) de la fibre optique (1,20) pendant l'étape c) d'injection d'une substance gazeuse et/ou pendant l'étape e) d'exposition à une substance gazeuse et/ou pendant l'étape de désorption de ladite espèce gazeuse incorporée, de manière à mesurer la quantité de substance gazeuse incorporée dans la fibre de silice.

6. Procédé de fabrication d'une fibre optique résistante aux radiations selon l'une des revendications précédentes, dans lequel ladite fibre optique (1) comporte une deuxième gaine (7) entourant la première gaine optique (6) et dans lequel ladite cavité longitudinale (3) est située dans la première gaine optique (6).

7. Procédé de fabrication d'une fibre optique résistante aux radiations selon l'une des revendications précédentes, dans lequel ladite substance gazeuse est choisie parmi de l'hydrogène gazeux et/ou du deutérium gazeux.

8. Fibre optique de silice résistante aux radiations (1, 20) comprenant :
- un coeur (2, 22) ;
- une gaine optique (6, 7, 26) ;
**caractérisée en ce que** ladite fibre optique comporte en outre :
- au moins une cavité longitudinale (3, 23) disposée à l'intérieur de la gaine optique (6, 26), la cavité longitudinale (3, 23) étant fermée aux deux extrémités de la fibre optique (1, 20),
- ladite fibre optique de silice comprenant une concentration déterminée en substance gazeuse, choisie de préférence parmi de l'hydrogène gazeux et/ou du deutérium gazeux ; et
- un revêtement hermétique (4, 24) à la diffusion de ladite substance gazeuse, le revêtement hermétique (4,24) comprenant de préférence une couche mince de carbone ou de métal.

9. Fibre optique de silice résistante aux radiations selon la revendication 8, dans lequel le coeur (2, 22) de la fibre optique (1) comprend un ou plusieurs éléments parmi : le silicium, le germanium, le phosphore, l'aluminium, le bore, le fluor et/ou un ou plusieurs dopants terre rare parmi le lanthane, le cérium, l'erbium, l'ytterbium, le néodyme, le thulium et/ou l'holmium.

10. Fibre optique de silice résistante aux radiations selon l'une des revendications 8 à 9, dans laquelle ladite fibre optique (20) est une fibre optique microstructurée, une fibre optique à cristaux photonique, une fibre de type à gaine d'air, une fibre optique à maintien de polarisation, une fibre optique polarisante, une fibre optique à double gaine, une fibre optique multi-coeur ou une fibre optique multigaine.

11. Dispositif à fibre optique comprenant au moins une fibre optique de silice résistante aux radiations selon l'une des revendications 8 à 10.

## Patentansprüche

1. Herstellungsverfahren einer strahlungsresistenten optischen Faser, wobei das Verfahren die folgenden Schritte aufweist:
a. Herstellen einer Vorform einer optischen Quarzglasfaser mit einer Längsachse, einem Kern und einer optischen Hülle,
b. Ausbilden wenigstens eines längsgerichteten Hohlraums in der Vorform,
c. Verfaserung der Vorform dergestalt, daß eine optische Quarzglasfaser (1, 20) mit einem Kern (2, 22), einer optischen Hülle (6, 7) und wenigstens einem längsgerichteten Hohlraum (3, 23) gebildet wird, wobei der längsgerichtete Hohlraum (3, 23) an einem Ende (10) der optischen Faser (1, 20) wenigstens eine Öffnung (13) aufweist,
d. Aufbringen einer gasdichten Beschichtung (4, 24), vorzugsweise aus Kohlenstoff oder Metall, während des Verfaserungsschrittes c), wobei die wenigstens eine Öffnung (13) zu einem längsgerichteten Hohlraum (3, 23) an einem Ende (10) der optischen Faser (1, 20) bewahrt bleibt,
e. Beaufschlagen der optischen Faser (1, 20) mit einer gasförmigen Substanz, die vornehmlich gasförmigen Wasserstoff und/oder gasförmiges Deuterium aufweist, unter gesteuerten Bedingungen bezüglich Druck, Temperatur und Beaufschlagungsdauer, um eine bestimmte Menge der gasförmigen Substanz durch die wenigstens eine Öffnung (13) in das Quarzglas einzubringen,
f. Verschließen jeglicher Öffnung (13) an den beiden Enden der optischen Faser (1, 20), um eine optische Faser (1, 20) zu bilden, die die gasförmige Substanz einschließt, wobei die optische Faser (1, 20) hinsichtlich einer Freisetzung der gasförmigen Substanz nach außerhalb der optischen Faser (1, 20) hermetisch dicht ist.

2. Herstellungsverfahren einer strahlungsresistenten optischen Faser gemäß Anspruch 1, bei dem der Schritt b) des Bildens wenigstens eines längsgerichteten Hohlraums in der Vorform das Bilden einer längsgerichteten Rille in der Vorform oder das Bilden eines zylinderischen Lochs mit einer zur Längsachse der Vorform parallelen Achse oder das Zusammensetzen eines Hohlrohrs beinhaltet.

3. Herstellungsverfahren einer strahlungsresistenten optischen Faser gemäß einem der Ansprüche 1 bis 2, bei dem der Schritt f) des Verschließens einen Schritt des Verschweißens eines Endes (10) der optischen Faser (1, 20) mit einer anderen vollen optischen Faser und/oder einen Schritt des Schrumpfschweißens eines Endes (10) der optischen Faser (1, 20) beinhaltet, wobei das Schrumpfschweißen geeignet ist, das besagte Ende der optischen Faser zu verschließen.

4. Herstellungsverfahren einer strahlungsresistenten optischen Faser gemäß einem der vorangehenden Ansprüche, das nach dem Schritt e) des Einbringens einer gasförmigen Substanz und vor dem Schritt f) des Verschließens einen weiteren Schritt der Desorption der eingebrachten gasförmigen Substanz aufweist, um die Konzentration der in die optische Faser eingebrachten gasförmigen Substanz zu reduzieren.

5. Herstellungsverfahren einer strahlungsresistenten optischen Faser gemäß einem der vorangehenden Ansprüche, das einen Schritt des Messens der optischen Übertragung oder der optischen Rückstreuung durch den Kern (2, 22) der optischen Faser (1, 20) hindurch während des Schrittes c) des Einbringens einer gasförmigen Substanz und/oder während des Schrittes e) des Beaufschlagens mit einer gasförmigen Substanz und/oder während des Schrittes der Desorption der eingebrachten gasförmigen Substanz aufweist, um die Menge an in die Quarzglasfaser eingebrachter gasförmiger Substanz zu messen.

6. Herstellungsverfahren einer strahlungsresistenten optischen Faser gemäß einem der vorangehenden Anspruche, bei dem die optische Faser (1) eine zweite, die erste optische Hülle (6) umgebende Hülle (7) aufweist und bei dem der längsgerichtete Hohlraum (3) in der ersten optischen Hülle (6) liegt.

7. Herstellungsverfahren einer strahlungsresistenten optischen Faser gemäß einem der vorangehenden Ansprüche, bei dem die gasförmige Substanz aus gasförmigem Wasserstoff und/oder gasförmigem Deuterium ausgewählt wird.

8. Strahlungsresistente optische Quarzglasfaser (1, 20), die
- einen Kern (2, 22),
- eine optische Hülle (6, 7, 26) aufweist,
**dadurch gekennzeichnet, daß** die optische Faser außerdem
- wenigstens einen im Inneren der optischen Hülle (6, 26) angeordneten längsgerichteten Hohlraum (3, 23) aufweist, wobei der längsgerichtete Hohlraum (3, 23) an beiden Enden der optischen Faser (1, 20) verschlossen ist,
- wobei die optische Quarzglasfaser eine bestimmte Konzentration an gasförmiger Substanz, die vorzugsweise aus gasförmigem Wasserstoff und/oder gasförmigem Deuterium ausgewählt ist, aufweist, und
- eine hinsichtlich einer Freisetzung der gasförmigen Substanz hermetisch dichte Beschichtung (4, 24) aufweist, wobei die hermetisch dichte Beschichtung (4, 24) vorzugsweise eine dünne Kohlenstoff- oder Metallschicht aufweist.

9. Strahlullgsresistente optische Quarzglasfaser gemäß Anspruch 8, bei der der Kern (2, 22) der optischen Faser (1) ein oder mehrere unter Silizium, Germanium, Phosphor, Aluminium, Bor, Fluor ausgewählte Elemente und/oder ein oder mehrere unter Lanthan, Cer, Erbium, Ytterbium, Neodym, Thulium und/oder Holmium ausgewählte Seltene-Erde-Dotierungselemente aufweist.

10. Strahlungsresistente optische Quarzglasfaser gemäß einem der Absprüche 8 bis 9, bei der die optische Faser (20) eine mikrostrukturierte optische Faser, eine optische Faser mit photonischen Kristallen, eine Faser des Typs mit Lufthülle, eine optische Faser mit Polarisationserhalt, eine polarisierende optische Faser, eine optische Faser mit doppelter Hülle, eine optische Faser mit mehreren Kernen oder eine optische Faser mit einer Vielzahl von Hüllen ist.

11. Vorrichtung mit optischer Faser, die wenigstens eine optische, strahlenresistente Quarzglasfaser nach einem der Ansprüche 8 bis 10 aufweist.

## Claims

1. A method of manufacturing a radiation-resistant optical fiber, the method comprising the following steps:
a. Manufacturing a silica optical fiber preform having a longitudinal axis, a core and an optical cladding;
b. Forming, in the preform, at least one longitudinal cavity;
c. Drawing said preform so as to form a silica optical fiber (1, 20) comprising a core (2, 22), an optical cladding (6, 7) and at least one longitudinal cavity (3, 23), said longitudinal cavity (3, 23) having at least one opening (13) at one end (10) of the optical fiber (1, 20);
d. Applying, during step c) of fiber drawing, a gas-tight coating (4, 24), preferably made of carbon or metal, while keeping said at least one opening (13) towards a longitudinal cavity (3, 23) at one end (10) of the optical fiber (1, 20);
e. Exposing the optical fiber (1, 20) to a gaseous substance, comprising preferably gaseous hydrogen and/or gaseous deuterium, in conditions of controlled pressure, temperature and duration of exposure so as to incorporate a determined quantity of said gaseous substance in the silica via said at least one opening (13);
f. Closing any opening (13) at both ends of the optical fiber (1, 20) so as to form an optical fiber (1, 20) incorporating said gaseous substance and said optical fiber (1, 20) being tight to the diffusion of said gaseous substance outside the optical fiber (1, 20).

2. The method of manufacturing a radiation-resistant optical fiber according to claim 1, wherein step b) of forming, in the preform, at least one longitudinal cavity comprises the formation of a longitudinal groove in said preform or the formation of a cylindrical hole of axis parallel to the longitudinal axis of the preform or the assembly of a hollow tube.

3. The method of manufacturing a radiation-resistant optical fiber according to one of claims 1 to 2, wherein step f) of closing comprises a step of welding one end (10) of said optical fiber (1, 20) to another solid optical fiber and/or a step of necking welding one end (10) of the optical fiber (1, 20), said necking welding being adapted to close said optical fiber end.

4. The method of manufacturing a radiation-resistant optical fiber according to one of the preceding claims, comprising, following step e) of incorporating a gaseous substance and before step f) of closing, an additional step of desorbing said incorporated gaseous species so as to reduce the incorporated gaseous species concentration in the optical fiber.

5. The method of manufacturing a radiation-resistant optical fiber according to one of the preceding claims, comprising a step of measuring the optical transmission or the optical back-scattering through the core (2, 22) of the optical fiber (1, 20) during step c) of injecting a gaseous substance and/or during step e) of exposing to a gaseous substance and/or during the step of desorption of said incorporated gaseous species, so as to measure the quantity of gaseous substance incorporated in the silica fiber.

6. The method of manufacturing a radiation-resistant optical fiber according to one of the preceding claims, wherein said optical fiber (1) includes a second cladding (7) surrounding the first optical cladding (6) and wherein said longitudinal cavity (3) is located in the first optical cladding (6).

7. The method of manufacturing a radiation-resistant optical fiber according to one of the preceding claims, wherein said gaseous substance is chosen among gaseous hydrogen and/or gaseous deuterium.

8. A radiation-resistant silica optical fiber (1, 20) comprising:
- a core (2, 22) ;
- an optical cladding (6, 7, 26);
**characterized in that** said optical fiber further includes:
- at least one longitudinal cavity (3, 23) arranged inside the optical cladding (6, 26), the longitudinal cavity (3, 23) being closed at both ends of the optical fiber (1, 20),
- said silica optical fiber comprising a determined concentration of gaseous substance, preferably chosen among gaseous hydrogen and/or gaseous deuterium; and
- a coating (4, 24) tight to the diffusion of said gaseous substance, the tight coating (4, 24) preferably comprising a thin layer of carbon or metal,

9. The radiation-resistant silica optical fiber according to claim 8, wherein the core (2, 22) of the optical fiber (1) comprises one or several elements among: silicon, germanium, phosphorus, aluminum, boron, fluorine and/or one or several rare-earth dopants among lanthanum, cerium, erbium, ytterbium, neodymium, thulium and/or holmium.

10. The radiation-resistant silica optical fiber according to one of claims 8 to 9,
wherein said optical fiber (20) is a microstructured optical fiber, a photonic crystal optical fiber, an air-clad fiber, a polarization-maintaining optical fiber, a polarizing optical fiber, a double-clad optical fiber, a multi-core optical fiber or a multi-clad optical fiber.

11. An optic-fiber device comprising at least one radiation-resistant silica optical fiber according to one of claims 8 to 10.
